# EUROPÄISCHE PATENTSCHRIFT

(11) **EP 1 567 253 B1**
(45) Veröffentlichungstag und Bekanntmachung des Hinweises auf die Patenterteilung: **20.09.2006**
(21) Anmeldenummer: 03753290.0
(22) Anmeldetag: 11.09.2003
(51) Int. Cl.: B01F 5/04, B01F 13/10

(54) **ZERSTÄUBUNGSANORDNUNG**
ATOMIZING ARRANGEMENT
DISPOSITIF D'ATOMISATION

(30) Priorität: 14.10.2002 DE 10247765
(43) Veröffentlichungstag der Anmeldung: 31.08.2005
(73) Patentinhaber: ROBERT BOSCH GMBH, 70442 Stuttgart (DE)
(72) Erfinder: MILLER, Frank, 74360 Ilsfeld (DE); ALBRODT, Hartmut, 71732 Tamm (DE)
(74) Vertreter: Körber, Martin Hans
(86) Internationale Anmeldenummer: PCT/DE2003/003011
(87) Internationale Veröffentlichungsnummer: WO 2004/035188

(56) Entgegenhaltungen:
- WO-A-01/53675
- DE-C- 19 650 559
- DATABASE WPI Section PQ, Week 198446 Derwent Publications Ltd., London, GB; Class Q73, AN 1984-286786 XP002266712 -& SU 1 020 697 A (UFA AVIATION INST), 30. Mai 1983 (1983-05-30)

## Beschreibung

### Stand der Technik

Die Erfindung geht aus von einer Zerstäubungsanordnung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen sog. chemische Reformer bzw. zur Bereitstellung der Reaktionstemperatur katalytischer Brenner oder Nachbrenneinrichtungen zum Einsatz.

Alle vom Reformer zum Reaktionsablauf benötigten Stoffe wie z.B. Luft, Wasser und Kraftstoff werden idealerweise dem Reformer in gasförmigem Zustand zugeführt. Da aber die Kraftstoffe , wie z.B. Methanol oder Benzin, und Wasser an Bord des Transportsystems vorzugsweise in flüssiger Form vorliegen, müssen sie erst, kurz bevor sie dem Reformer zugeführt werden, erhitzt werden, um sie zu verdampfen. Dies erfordert einen Vorverdampfer (separat oder im Reformer integriert), der in der Lage ist, die entsprechenden Mengen an gasförmigem Kraftstoff und Wasserdampf zur Verfügung zu stellen.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage die entsprechenden Mengen an gasförmigen Reaktanden verzögerungsfrei zu erzeugen.

Es ist daher sinnvoll, den Kraftstoff durch eine Zerstäubungseinrichtung in feinverteilter Form in den Reformer einzubringen, wobei, bei ausreichendem Wärmeangebot, der Verdampfungsprozeß durch die hohe Oberfläche des feinverteilten Kraftstoffs verbessert wird.

Die für die chemische Reaktion, in welcher beispielsweise der Kraftstoff unter anderem zu Wasserstoff reformiert wird, notwendige Temperatur, wird durch sogenannte Katbrenner zur Verfügung gestellt. Katbrenner sind Komponenten, welche mit einem Katalysator beschichtete Flächen aufweisen. In diesen katalytischen Brennern wird das Kraftstoff/Luftgemisch in Wärme und Abgase gewandelt, wobei die entstehende Wärme beispielsweise über die Mantelflächen und/oder über den warmen Abgasstrom an die entsprechenden Komponenten, wie beispielsweise den chemischen Reformer oder einen Verdampfer, geführt wird.

Die Umsetzung des Kraftstoffs in Wärme ist stark von der Größe der Kraftstofftröpfchen, welche auf die katalytische Schicht auftreffen, abhängig. Je kleiner die Tröpfchengröße ist und je gleichmäßiger die katalytische Schicht mit den Kraftstofftröpfchen benetzt wird, desto vollständiger wird der Kraftstoff in Wärme gewandelt und desto höher ist der Wirkungsgrad. Der Kraftstoff wird so zudem schneller umgesetzt und Schadstoffemissionen gemindert. Zu große Kraftstofftröpfchen führen zu einer Belegung der katalytischen Schicht und damit zu einer nur langsamen Umsetzung. Dies führt insbesondere in der Kaltstartphase beispielsweise zu einem schlechten Wirkungsgrad.

Weiterhin kann eine solche Zerstäubungsanordnung zur Eindosierung einer Harnstoff-Wasser-Lösung direkt in den Abgasstrahl zur Abgasnachbehandlung verwendet werden.

Beispielsweise sind aus der US 3,971,847 Vorrichtungen zur Reformierung von Kraftstoffen bekannt. Der Kraftstoff wird hierin von vom Reformer relativ weit entfernten Zumeßeinrichtungen über lange Zuführungsleitungen in einen temperierten Stoffstrom zugemessen und über eine Dosieröffnung am Ende der Zuführungsleitung in den Stoffstrom verteilt, welcher zum Ort des eigentlichen Reformierprozesses strömt.

Nachteilig bei den aus der obengenannten Druckschrift bekannten Vorrichtungen ist insbesondere, daß die langen Zuführungsleitungen zu Verzögerungen und Ungenauigkeiten im Zumessen von Kraftstoff führen, insbesondere bei starken Lastwechseln oder Warmstartphasen. Wird beispielsweise nach einer Stopphase, während der Kraftstoff durch die Temperatureinwirkung aus der Zuführungsleitung verdampft, die Kraftstoffzumessung wieder aufgenommen, so kommt es zu verzögerter Eindosierung von Kraftstoff in den temperierten Stoffstrom und zum Reformierungsprozeß durch das zunächst wieder aufzufüllende Totraumvolumen in der Zuführungsleitung. Das gleiche Problem ergibt sich bei besonders geringer Last. Im Weiteren stehen lange Zuführungsleitungen einer kompakten Bauweise entgegen, erhöhen die Fehleranfälligkeit und den Montageaufwand.

In WO 01/53675 ist eine Zerstäubungsanordnung für ein Gas-Flüssigkeitsgemisch, insbesondere zum Eintrag in einen chemischen Reformer zur Erzeugung von Wasserstoff, beschrieben, die mindestens eine Gaszuleitung für die Zufuhr eines Gasstroms und mindestens eine Flüssigkeitszuleitung für die Zufuhr eines Flüssigkeitsstroms enthält. Die Gaszuleitung weist zumindest eine erste Verzweigungsstelle auf, an der ein Teilstrom des Gasstroms in eine als Bypass ausgeführte Seitenleitung ableitbar ist. In die Seitenleitung mündet der Flüssigkeitsstrom an einer Austrittsstelle der Flüssigkeitszuleitung. Die Gaszuleitung weist mindestens eine zweite Verzweigungsstelle auf, an der die Seitenleitung mit dem den Flüssigkeitsstrom enthaltenen Teilstrom wieder zuführbar ist. Um eine möglichst effektive Vermischung von Teil- und Hauptgasstrom zu erreichen, weist die Hautgasleitung in dem Bereich der zweiten Verzweigungsstelle eine Querschnittsverengung in Form eines Venturirohres auf.

In SU 1 020 697 A sowie XP002266712 ist ein Kraftstoffzerstäuber beschrieben, welcher ein Vormischkammer, Kraftstoffzuführleitungen und Auslassdüsenöffnungen aufweist. Um die Zerstäubungsqualität und Mischungsbildung zu verbessern, sind die Auslassdüsenöffnungen in der Kammerquerebene in Paaren angeordnet. Luft wird über zwei weitere Zuleitungen zugeführt. Der Kraftstoffstrom trifft auf den Luftstrom, wobei ein zweiphasiger Kraftstoff-Luft-Strom gebildet wird. Die zweiphasige Mischung verlässt die Kammer durch Düsenöffnungen und wird mittels zusammenwirkender Strahlen zerlegt.

### Vorteile der Erfindung

Die erfindungsgemäße Zerstäubungsanordnung mit den kennzeichnenden Merkmalen des Hauptanspruchs hat demgegenüber den Vorteil, daß die Kombination einer Zumeßeinrichtung, vorzugsweise in Form eines Niederdruckbrennstoffeinspritzventils, mit einer Dosierstelle und einer Zerstäubungseinrichtung beliebiger Form eine kompakte Bauweise und eine feine Gemischaufbereitung auch bei hohen Temperaturen ermöglicht.

Durch die in den Unteransprüchen aufgeführten Maßnahmen sind vorteilhafte Weiterentwicklungen der im Hauptanspruch angegebenen Zerstäubungsanordnung möglich.

Vorteilhafterweise wird als Zumeßeinrichtung ein Brennstoffeinspritzventil eingesetzt, wie es z. B. aus Hubkolbenmaschinen mit innerer Verbrennung bekannt ist. Der Einsatz solcher Ventile hat mehrere Vorteile. So lassen sie eine besonders genaue Steuerung bzw. Regelung der Kraftstoffzumessung zu, wobei die Zumessung über mehrere Parameter, wie z.B. Tastverhältnis, Taktfrequenz und ggf. Hublänge, gesteuert werden kann. Dabei ist die Abhängigkeit vom Pumpendruck weit weniger ausgeprägt als bei Zumeßeinrichtungen, die über den Leitungsquerschnitt den Volumenstrom des Kraftstoffs regeln, und der Dosierbereich ist deutlich größer. Darüber hinaus sind besagte Brennstoffeinspritzventile vielfach bewährte, in ihrem Verhalten bekannte, kostengünstige, gegenüber den verwendeten Kraftstoffen chemisch stabile und zuverlässige Bauteile, wobei dies im besonderen für sog. Niederdruckbrennstoffeinspritzventile zutrifft, die aufgrund der thermischen Entkopplung hier einsetzbar sind.

Von Vorteil ist außerdem, daß die Zufuhr eines temperierten Stoffstroms, beispielsweise eines Luftstroms, sowohl zwischen der Dosier- und der Zerstäubungsstelle als auch abströmseitig der letzteren möglich ist. Dadurch können kompakte Bauformen für beliebige Einbaulagen entwickelt werden.

Weiterhin ist von Vorteil, mehrere Dosieröffnungen über die Oberfläche des Verbindungsrohres zu verteilen und auf diese Weise für eine besonders gleichmäßige Verteilung des Gemisches in die einzudosierenden Komponenten zu erreichen.

Eine besonders vorteilhafte Ausführungsform sieht vor, die Dosier- und Zerstäubungsstelle gemeinsam am Brennstoffeinspritzventil anzuordnen. Dieses kann dann unter einem beliebigen Winkel in das Verbindungsrohr einspritzen, so daß auch kompliziertere Einbaulagen realisierbar sind.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Darstellung eines ersten Ausführungsbeispiels einer erfindungsgemäßen Zerstäubungsanordnung,
- Fig. 2A: eine schematische Darstellung eines zweiten Ausführungsbeispiels einer erfindungsgemäßen Zerstäubungsanordnung,
- Fig. 2B: eine schematische Darstellung einer Einbausituation des in Fig. 2A dargestellten Ausführungsbeispiels,
- Fig. 3: eine schematische Darstellung eines dritten Ausführungsbeispiels einer erfindungsgemäßen Zerstäubungsanordnung,
- Fig. 4A: eine schematische Darstellung eines vierten Ausführungsbeispiels einer erfindungsgemäßen Zerstäubungsanordnung,
- Fig. 4B: eine schematische Darstellung einer Einbausituation des in Fig. 4A dargestellten Ausführungsbeispiels,
- Fig. 5: eine schematische Darstellung eines fünften Ausführungsbeispiels einer erfindungsgemäßen Zerstäubungsanordnung, und
- Fig. 6: eine schematische Darstellung eines sechsten Ausführungsbeispiels einer erfindungsgemäßen Zerstäubungsanordnung.

### Beschreibung der Ausführungsbeispiele

Nachfolgend werden Ausführungsbeispiele der Erfindung beispielhaft beschrieben.

Durch eine geeignete Wahl der Parameter des Niederdruckbrennstoff einspritzventils 2 können die für die Methanol- und Benzinreformierung für Brennstoffzellenkomponenten benötigten Durchflußparameter q_{dyn} und Qₛₜₐₜ realisiert werden. Weiterhin ist von Interesse, die Temperaturen im Bereich des Niederdruckbrennstoffeinspritzventils 2 so niedrig wie möglich zu halten, um kostengünstigerweise serienmäßige Brennstoffeinspritzventile einsetzen zu können. Andererseits ist jedoch auch zu beachten, daß die Temperaturunterschiede beim Betrieb der Zerstäubungsanordnung 1 stark variieren. So treten in der Kaltstartphase lediglich Temperaturen um die 20-30°C auf, während im Vollastbetrieb bis zu 500-800°C auftreten können. Dementsprechend muß der Kraftstoff beim Kaltstart sehr fein dosierbar und gleichmäßig verteilbar sein, da sonst der Wirkungsgrad durch die langsame thermische Umsetzung des Kraftstoffes leidet.

Die nachfolgend beschriebenen Ausführungsbeispiele von erfindungsgemäß ausgestalteten Zerstäubungsanordnungen 1 tragen den vorstehend geschilderten Sachverhalten Rechnung und ermöglichen eine einfache Dosierung und Zerstäubung in heißer Atmosphäre bei robuster Konstruktion, Anwendung in unterschiedlichen räumlichen Konstellationen und Einsatz von Standard-Niederdruckbrennstoffeinspritzventilen.

In den Figuren sind gleiche Bauteile zur Erleichterung der Orientierung jeweils mit übereinstimmenden Bezugszeichen versehen. Die Pfeile symbolisieren jeweils die Brennstoff- und Luftströme.

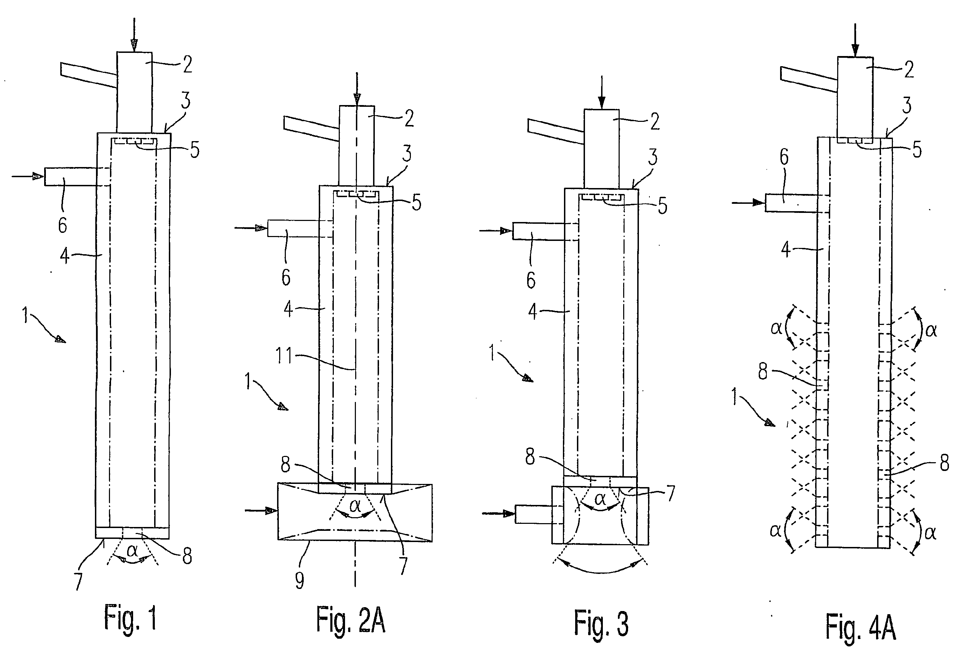

Ein in Fig. 1 schematisiert dargestelltes erstes Ausführungsbeispiel einer erfindungsgemäßen Zerstäubungsanordnung 1 ist in der Form einer Zerstäubungsanordnung 1 für die Verwendung von Niederdruckbrennstoffeinspritzventilen 2 ausgeführt. Die Zerstäubungsanordnung 1 eignet sich insbesondere zum Eintrag und zur Zerstäubung von Kraftstoff in einen nicht dargestellten chemischen Reformer oder einen katalytischen Brenner zur Gewinnung von Wasserstoff.

Das Niederdruckbrennstoffeinspritzventil 2 ist im ersten Ausführungsbeispiel an einer zuströmseitigen Seite 3 eines Verbindungsrohres 4 angeordnet. Das Verbindungsrohr 4 ist dabei so ausgeformt, daß abströmseitig des Niederdruckbrennstoffeinspritzventils 2 eine Dosierstelle 5 vorgesehen ist, welche die Menge des in das Verbindungsrohr 4 eingespritzten Brennstoffs begrenzt.

An einer beliebigen Stelle abströmseitig der Dosierstelle 5 mündet ein weiteres Rohr 6 in das Verbindungsrohr 4 ein, durch welches ein Luftstrom in das Verbindungsrohr 4 einleitbar ist. Das Rohr 6 kann dabei unter einem beliebigen Winkel, welcher jedoch vorzugsweise ca. 90° beträgt, in das Verbindungsrohr 4 einmünden.

An einer abströmseitigen Stirnseite 7 des Verbindungsrohres 4 ist eine Zerstäubungsstelle 8 vorgesehen, an welcher das in dem Verbindungsrohr 4 aus Luft und Kraftstoff gebildete Gemisch zerstäubt wird. Dies kann beispielsweise mittels einer Zerstäuberscheibe, einer Drallscheibe oder eines beliebigen anderen Drall- oder Zerstäubungseinsatzes an der Zerstäubungsstelle 8 erfolgen. Ein Strahlöffnungswinkel α des zerstäubten Strahls kann dabei beliebig durch eine geeignete Wahl der Zerstäubungsvorrichtung an die Bedingungen angepaßt werden.

Fig. 2A und 2B zeigen ein zweites Ausführungsbeispiel einer erfindungsgemäß ausgestalteten Zerstäubungsanordnung 1 als Prinzipskizze sowie in einer Einbausituation. Im Gegensatz zu dem in Fig. 1 dargestellten Ausführungsbeispiel ist die Zuführung der Luft über das Rohr 6 optional. Die eigentliche Gemischbildung findet in einem Rohrabschnitt 9 abströmseitig des Verbindungsrohres 4 statt. Vorteil bei diesem Ausführungsbeispiel ist, daß der Luftstrom abströmseitig der Zerstäubungsstelle 8 direkt in den bereits zerstäubten Kraftstoff geleitet wird, wodurch eine bessere Verteilung des Gemisches erzielt wird.

Durch die rechtwinkelige Anordnung des Rohrabschnitts 9 relativ zum Verbindungsrohr 4 können mit dem in den Fig. 2A und 2B dargestellten Ausführungsbeispiel andere Geometrien erzielt werden, wodurch u. U. eine günstigere Einbaulage relativ zu anderen, nicht näher dargestellten Komponenten (10 in Fig. 2B und 4B) der Brennstoffzelle möglich ist.

Das in Fig. 3 dargestellte Ausführungsbeispiel stellt eine Kombination aus den in den Fig. 1 und 2 dargestellten Ausführungsvarianten dar. Auch hier wird, wie im zweiten Ausführungsbeispiel, der Luftstrom erst nach der Zerstäubungsanordnung 8 zugeführt, die einzudosierenden Komponenten sind jedoch in Richtung einer Achse 11 des Verbindungsrohres 4 wie im ersten Ausführungsbeispiel angeordnet.

Fig. 4A und 4B zeigen ein weiteres Ausführungsbeispiel einer erfindungsgemäß ausgestalteten Zumeßvorrichtung, welche insbesondere für enge Einbaulagen geeignet ist. Hierbei wird der Luftstrom, wie in dem in Fig. 1 dargestellten ersten Ausführungsbeispiel, über das Rohr 6 vor der Zerstäubungsstelle 8 zugeleitet. Die Zerstäubung erfolgt dann über viele Zerstäubungsstellen 8, welche in beliebiger, den Verhältnissen zuträglicher Anordnung über die Fläche des Verbindungsrohres 4 verteilt sein können. Durch die Überschneidung der einzelnen, die Zerstäubungsstellen 8 verlassenden Kraftstoffstrahlen ist eine besonders gleichmäßige Verteilung möglich.

Fig. 4B zeigt eine beispielhafte Einbausituation für das in Fig. 4A dargestellte Ausführungsbeispiel, welches sich durch einen besonders hohen Kompaktheitsgrad wegen der kurzen Einbaulänge auszeichnet.

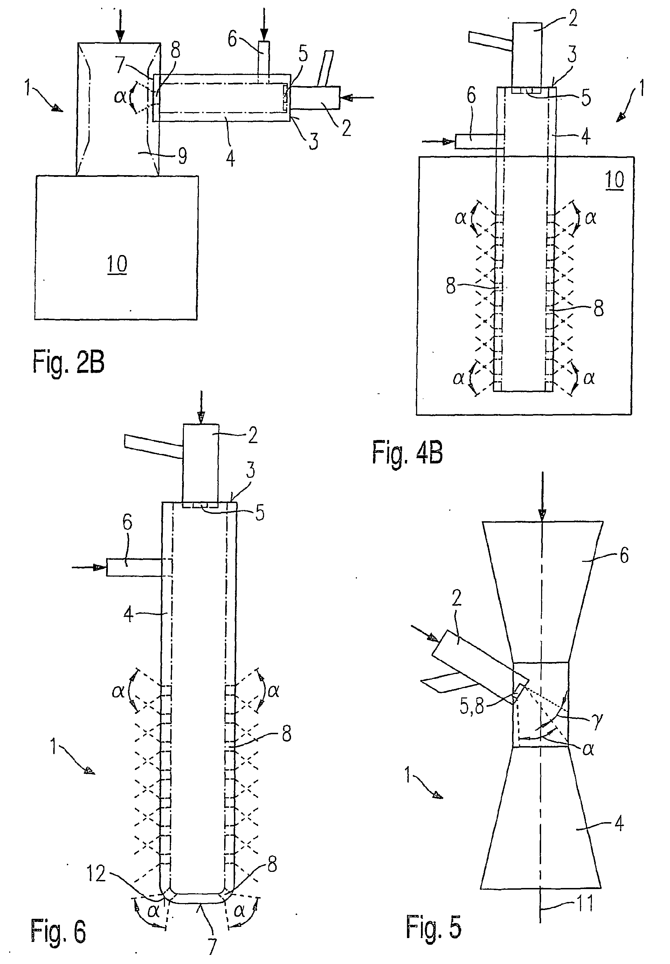

Fig. 5 stellt ein anders ausgestaltetes Ausführungsbeispiel dar, bei welchem das Niederdruckbrennstoffeinspritzventil 2 nicht zuströmseitig des Verbindungsrohres 4, sondern seitlich unter frei wählbaren Winkeln α (Öffnungswinkel des von dem Brennstoffeinspritzventil 2 eingespritzten Strahls) und γ (Neigungswinkel des Strahls) angeordnet ist. Dabei fallen die Dosierstelle 5 und die Zerstäubungsstelle 8 zusammen, und das bereits zerstäubte Kraftstoffgemisch wird unter den oben erwähnten Winkeln wie in dem in Fig. 2 dargestellten Ausführungsbeispiel direkt in den Luftstrom eingebracht. Die Dosierung/Zerstäubung findet im Bereich eines verjüngten Querschnitts bei höherer Strömungsgeschwindigkeit statt. Vorteil ist auch hier die Möglichkeit zu einer kompakten Bauform bei Ersparnis einer separaten Zerstäubungsstelle.

Fig.6 zeigt ein weiteres Ausführungsbeispiel einer erfindungsgemäß ausgestalteten Zumeßvorrichtung, welche wie das in den Fig. 4A und 4B dargestellte Ausführungsbeispiel insbesondere für enge Einbaulagen geeignet ist. Hierbei wird der Luftstrom, wie in dem in Fig. 1 dargestellten ersten Ausführungsbeispiel, über das Rohr 6 vor der Zerstäubungsstelle 8 zugeleitet. Die Zerstäubung erfolgt dann über viele Zerstäubungsstellen 8, welche in beliebiger, den Verhältnissen zuträglicher Anordnung über die Fläche des Verbindungsrohres 4 verteilt sein können. Durch die Überschneidung der einzelnen, die Zerstäubungsstellen 8 verlassenden Kraftstoffstrahlen ist eine besonders gleichmäßige Verteilung möglich.

Im Gegensatz zu dem in den Fig. 4A und 4B dargestellten Ausführungsbeispiel weist das sechste Ausführungsbeispiel auch im Bereich der Stirnseite 7 des Verbindungsrohres 4, insbesondere an abgerundeten Ecken 12, Zerstäubungsstellen 8 auf. Dadurch kann eine Zerstäubung auch in Räume erfolgen, welche länger als das Verbindungsrohr 4 sind. Die Strahlöffnungswinkel α der Zerstäubungsstellen 8 können dabei gleich denen der übrigen Zerstäubungsstellen 8 sein oder auch je nach den Anforderungen kleiner oder größer gewählt werden.

Die Erfindung ist nicht auf die beschriebenen Ausführungsbeispiele beschränkt und ist für beliebige andere Zerstäubungsanordnungen anwendbar.

## Patentansprüche

1. Zerstäubungsanordnung (1) für Kraftstoffe, insbesondere zum Eintrag in einen chemischen Reformer zur Gewinnung von Wasserstoff, mit zumindest einer Zumesseinrichtung (2) zum Zumessen von Kraftstoff an zumindest einer Dosierstelle (5) in ein Verbindungsrohr (4), in welches ein temperierter Stoffstrom einleitbar ist,
wobei das Verbindungsrohr (4) zumindest eine Zerstäubungsstelle (8) aufweist, welche abströmseitig der zumindest einen Dosierstelle (5) angeordnet ist, **dadurch gekennzeichet dass** die Zumesseinrichtung (2) als Niederdruckbrennstoffeinspritzventil (2) ausgebildet ist.

2. Zerstäubungsanordnung nach Anspruch 1,
**dadurch gekennzeichnet,**
**dass** das Niederdruckbrennstoffeinspritzventil (2) an einer Stirnseite (3) des Verbindungsrohres (4) ausgebildet ist.

3. Zerstäubungsanordnung nach Anspruch 1 oder 2,
**dadurch gekennzeichnet,**
**dass** die Dosierstelle (5) an dem Niederdruckbrennstoffeinspritzventil (2) ausgebildet ist.

4. Zerstäubungsanordnung nach einem der Ansprüche 1 bis 3,
**dadurch gekennzeichnet,**
**dass** die Zuführung des temperierten Stoffstroms zwischen der Dosierstelle (5) und der Zerstäubungsstelle (8) erfolgt.

5. Zerstäubungsanordnung nach Anspruch 4,
**dadurch gekennzeichnet,**
**dass** der temperierte Stoffstrom über ein Rohr (6) zuführbar ist.

6. Zerstäubungsanordnung nach Anspruch 5,
**dadurch gekennzeichnet,**
**dass** das Rohr (6) unter einem Winkel von ca. 90° in das Verbindungsrohr (4) einmündet.

7. Zerstäubungsanordnung nach einem der Ansprüche 1 bis 3,
**dadurch gekennzeichnet,**
**dass** die Zuführung des temperierten Stoffstroms abströmseitig der Zerstäubungsstelle (8) erfolgt.

8. Zerstäubungsanordnung nach Anspruch 7,
**dadurch gekennzeichnet,**
**dass** die Weiterleitung des aus Kraftstoff und Stoffstrom gebildeten Gemisches entlang einer Achse (11) des Verbindungsrohres (4) erfolgt.

9. Zerstäubungsanordnung nach Anspruch 7,
**dadurch gekennzeichnet,**
**dass** die Weiterleitung des aus Kraftstoff und Stoffstrom gebildeten Gemisches senkrecht zu einer Achse (11) des Verbindungsrohres (4) erfolgt.

10. Zerstäubungsanordnung nach einem der Ansprüche 1 bis 9,
**dadurch gekennzeichnet,**
**dass** mehrere Zerstäubungsstellen (8) vorgesehen sind.

11. Zerstäubungsanordnung nach Anspruch 2 oder 3,
**dadurch gekennzeichnet,**
**dass** die Dosierstelle (5) und die Zerstäubungsstelle (8) gemeinsam am Niederdruckbrennstoffeinspritzventil (2) ausgebildet sind.

12. Zerstäubungsanordnung nach Anspruch 11,
**dadurch gekennzeichnet,**
**dass** das Niederdruckbrennstoffeinspritzventil (2) unter einem vorgegebenen Winkel gegenüber einer Achse (11) des Rohrs (6) und des Verbindungsrohres 84) geneigt ist.

13. Zerstäubungsanordnung nach einem der Ansprüche 1 bis 12,
**dadurch gekennzeichnet,**
**dass** die Zerstäuberstelle (8) eine Zerstäubervorrichtung in Form einer Drallscheibe, einer Spritzlochscheibe, eines Dralleinsatzes oder einer Dralldüse mit einem oder mehreren Löchern aufweist.

14. Zerstäubungsanordnung nach einem der Ansprüche 1 bis 13,
**dadurch gekennzeichnet,**
**dass** die Zerstäubungsstellen (8) zumindest teilweise in abgerundeten Ecken (12) einer Stirnseite (7) des Verbindungsrohres (4) angeordnet ist.

## Claims

1. Atomization arrangement (1) for fuels, in particular for introduction into a chemical reformer for obtaining hydrogen, having at least one metering device (2) for metering fuel into a connecting pipe (4), into which a temperature-controlled substance stream can be introduced, at at least one dosing location (5), the connecting pipe (4) having at least one atomization location (8), which is arranged on the outflow side of the at least one dosing location (5), **characterized in that** the metering device (2) is formed as a low-pressure fuel injection valve (2).

2. Atomization arrangement according to Claim 1, **characterized in that** the low-pressure fuel injection valve (2) is formed at an end side (3) of the connecting pipe (4).

3. Atomization arrangement according to Claim 1 or 2, **characterized in that** the metering location (5) is formed at the low-pressure fuel injection valve (2).

4. Atomization arrangement according to one of Claims 1 to 3, **characterized in that** the temperature-controlled substance stream is supplied between the dosing location (5) and the atomization location (8).

5. Atomization arrangement according to Claim 4, **characterized in that** the temperature-controlled substance stream can be supplied via a pipe (6).

6. Atomization arrangement according to Claim 5, **characterized in that** the pipe (6) opens out into the connecting pipe (4) at an angle of approx. 90°.

7. Atomization arrangement according to one of Claims 1 to 3, **characterized in that** the temperature-controlled substance stream is supplied at the outflow side of the atomization location (8).

8. Atomization arrangement according to Claim 7, **characterized in that** the mixture formed from fuel and substance stream is passed on along an axis (11) of the connecting pipe (4).

9. Atomization arrangement according to Claim 7, **characterized in that** the mixture formed from fuel and substance stream is passed on perpendicular to an axis (11) of the connecting pipe (4).

10. Atomization arrangement according to one of Claims 1 to 9, **characterized in that** a plurality of atomization locations (8) are provided.

11. Atomization arrangement according to Claim 2 or 3, **characterized in that** the metering location (5) and the atomization location (8) are jointly formed at the low-pressure fuel injection valve (2).

12. Atomization arrangement according to Claim 11, **characterized in that** the low-pressure fuel injection valve (2) is inclined at a predetermined angle with respect to an axis (11) of the pipe (6) and of the connecting pipe (4).

13. Atomization arrangement according to one of Claims 1 to 12, **characterized in that** the atomizer location (8) has an atomizer apparatus in the form of a swirl disc, a perforated injection disc, a swirl insert or a swirl nozzle having one or more holes.

14. Atomization arrangement according to one of Claims 1 to 13, **characterized in that** the atomization locations (8) are at least in part arranged in rounded corners (12) of an end side (7) of the connecting pipe (4).

## Revendications

1. Dispositif de pulvérisation (1) pour des carburants notamment pour l'introduction d'un réformeur chimique pour obtenir de l'hydrogène, comportant au moins une installation de dosage (2) pour doser le carburant e au moins un point au dosage (5) dans une conduite de liaison (4) recevant un flux de matière mis en température,
la conduite de liaison (4) ayant au moins un point de pulvérisation (8) prévu en aval d'au moins un point de dosage (5)
**caractérisé en ce que**
l'installation de dosage (2) est un injecteur de carburant basse pression.

2. Dispositif de pulvérisation (1) selon la revendication 1,
**caractérisé en ce que**
l'injecteur de carburant basse pression (2) est réalisé au niveau de la face frontale (3) de la conduite de liaison (4).

3. Dispositif de pulvérisation (1) selon la revendication 1 ou 2
**caractérisé en ce que**
le point de dosage (5) est réalisé sur la soupape d'injection de carburant basse pression (2).

4. Dispositif de pulvérisation (1) selon l'une des revendications 1 à 3,
**caractérisé en ce que**
l'alimentation du flux de matière mis en température se fait entre le point de dosage (5) et le point de pulvérisation (8).

5. Dispositif de pulvérisation (1) selon la revendication 4,
**caractérisé en ce que**
le flux de matière mis en température est introduit par un tube (6).

6. Dispositif de pulvérisation (1) selon la revendication 5,
**caractérisé en ce que**
le tube (6) débouche dans le tube de liaison (4) sous un angle d'environ 90°.

7. Dispositif de pulvérisation (1) selon l'une des revendications 1 à 3,
**caractérisé en ce que**
l'arrivée du flux de matière mis en température se fait en aval du point de pulvérisation (8).

8. Dispositif de pulvérisation (1) selon la revendication 7,
**caractérisé en ce que**
la transmission du mélange entre le carburant et le flux de matière se fait suivant l'axe (11) du tube de liaison (4).

9. Dispositif de pulvérisation (1) selon la revendication 7,
**caractérisé en ce que**
la transmission du mélange formé du carburant et du flux de matière se fait perpendiculairement à un axe (11) du tube de liaison (4).

10. Dispositif de pulvérisation (1) selon l'une des revendications 1 à 9,
**caractérisé par**
plusieurs points de pulvérisation (8).

11. Dispositif de pulvérisation (1) selon les revendications 2 ou 3,
**caractérisé en ce que**
le poids de dosage (5) et le point de pulvérisation (8) sont réalisés en commun dans l'injecteur de carburant basse pression (2).

12. Dispositif de pulvérisation (1) selon la revendication 11,
**caractérisé en ce que**
l'injecteur de carburant basse pression (2) est incliné sur un angle pré-défini par rapport à l'axe (11) du tube (6) et du tube de liaison (84).

13. Dispositif de pulvérisation (1) selon l'une des revendications 1 à 12,
**caractérisé en ce que**
le point de pulvérisation (8) comporte un dispositif de pulvérisation sous la forme d'un disque rotatif, d'un disque à trous d'injection, une garniture de mise en rotation d'une buse de mise en rotation avec un ou plusieurs trous.

14. Dispositif de pulvérisation (1) selon l'une des revendications 1 à 13,
**caractérisé en ce que**
le point de pulvérisation (8) est prévu au moins en partie dans les coins arrondis (12) d'une face frontale (7) du tube de liaison (4).
